(19) **Europäisches Patentamt**
**European Patent Office**
**Office européen des brevets**

(11) **EP 2 202 567 A1**

(12) **EUROPEAN PATENT APPLICATION**
published in accordance with Art. 153(4) EPC

(43) Date of publication:
**30.06.2010 Bulletin 2010/26**

(51) Int Cl.:
***G02F 1/167*** (2006.01)    ***B82B 3/00*** (2006.01)

(21) Application number: **08835559.9**

(22) Date of filing: **17.09.2008**

(86) International application number:
**PCT/JP2008/066742**

(87) International publication number:
**WO 2009/044633 (09.04.2009 Gazette 2009/15)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **04.10.2007 JP 2007261193**

(71) Applicant: **Bridgestone Corporation Tokyo 104-8340 (JP)**

(72) Inventors:
• **KAGA, Norihiko**
  **Kodaira-shi**
  **Tokyo 187-8531 (JP)**

• **ARAI, Toshiaki**
  **Kodaira-shi**
  **Tokyo 187-8531 (JP)**
• **OKUNO, Akira**
  **Kodaira-shi**
  **Tokyo 187-8531 (JP)**

(74) Representative: **Lamb, Martin John Carstairs Marks & Clerk LLP**
  **90 Long Acre**
  **London**
  **WC2E 9RA (GB)**

(54) **PARTICLE FOR DISPLAY MEDIUM AND INFORMATION DISPLAY PANEL EMPLOYING THE SAME**

(57) The present invention provides an information display panel capable of achieving good display performance (high contrast and low voltage driving), especially high contrast for a long term from the initial stage by using particles for display media whose charge amount is controllable

In an information display panel, in which at least one kind of display media are sealed in a space between two substrates at least one of which is transparent, for displaying an image by electrically moving the display media, a particle for display media combined in a form of a mother particle embedded with first child particles and second child particles, wherein the first child particles and the second child particles have a smaller particle diameter and higher hardness than those of the mother particle and the first child particles and the second child particles have different charging characteristics with each other is used as the display media.

*FIG. 2*

EP 2 202 567 A1

**Description**

TECHNICAL FIELD

The present invention relates to a particle combined in a form of a mother particle embedded with child particles and an information display panel using this combined particle.

RELATED ART

As an information display device substitutable for a liquid crystal display (LCD), there are known information display devices adopting a method driving charged particles in a liquid (an electrophoretic method) or a method driving the charged particles in a gas (for example, an electronic liquid powder method).

As the information display panel used for the information display apparatus of a method driving charged particles, there is known an information display panel, in which at least two kinds of display media composed of at least one kind of particles and having optical reflectance and charging property are sealed in a space between two opposing substrates, at least one of which is transparent, for displaying information such as an image by moving the display media by application of an electric field to the display media (for example, in WO2003/050606).

DISCLOSURE OF THE INVENTION

PROBLEMS TO BE SOLVED BY THE INVENTION

The above-mentioned information display panel has disadvantages that, when particles obtained from kneading, crushing and classifying by use of conventional compositions and materials are used as particles for display media composing the display media, the particles for display media are pressed against the substrate and deformed because of an image force of electrification charge of the particles for display media and an adhered area of the particles for display media to the panel substrate is increased and therefore adherence of the particles for display media to the substrate is increased, which unable to achieve a high contrast display and to reduce driving voltage. In addition, a conventional particle for display media which has a structure in which fine particles are attached to the surface of the particle is proposed to solve the above-mentioned problems by providing a microstructure in the surface of the particle for display media of this structure. However, it is difficult to delicately control the charge amount which is the maximum control factor of display characteristics.

An object of the present invention is to solve the above-mentioned problems and to provide an information display panel and particles for display media used for the information display panel capable of achieving good display performance (high contrast and low voltage driving), especially high contrast for a long term from the initial stage by using particles for display media whose charge amount is controllable.

MEANS FOR SOLVING THE PROBLEM

A particle for display media of the present invention is a particle for display media combined in a form of a mother particle embedded with first child particles and second child particles, wherein the first child particles and the second child particles have a smaller particle diameter and higher hardness than those of the mother particle and the first child particles and the second child particles have different charging characteristics with each other.

In the particle for display media of the present invention, it is preferable that the first child particles and the second child particles have an aspect ratio of not less than 0.8.

In the particle for display media of the present invention, it is preferable that the first child particles have an average particle diameter within a range between 2/3 and 3/2 of that of the second child particles.

In the particle for display media of the present invention, it is preferable that an absolute difference between a saturated charge amount of the first child particles and a saturated charge amount of the second child particles is not less than 10 $\mu$C/m$^2$.

In the particle for display media of the present invention, it is preferable that fine particles are attached to outer sides of the first child particles and the second particles.

An information display panel of the present invention, in which at least one kind of display media are sealed in a space between two substrates, at least one of which is transparent, for displaying an image by electrically moving the display media, is **characterized in that** at least one kind of the above-mentioned particle for display media is used as the display media.

EFFECT OF THE INVENTION

According to the present invention, in an information display panel, in which at least one kind of display media are sealed in a space between two substrates at least one of which is transparent, for displaying an image by electrically moving the display media, by using, as the display media, a particle for display media combined in a form of a mother particle embedded with first child particles and second child particles, wherein the first child particles and the second child particles have a smaller particle diameter and higher hardness than those of the mother particle and the first child particles and the second child particles have different charging characteristics with each other, it is possible to control the charge amount of the particles for display media and to provide an information display panel and particles for display media used for the information display panel capable of achieving good display performance (high contrast and low voltage driving), especially high contrast for a long term from the initial stage.

BRIEF DESCRIPTION OF THE DRAWINGS

[Fig. 1] Figs. 1a and 1b are views respectively illustrating an example of an information display panel according to the present invention.
[Fig. 2] Fig. 2 is a view illustrating a basic structure of a particle for display media according to the present invention.
[Fig. 3] Fig. 3 is a view illustrating other structural example of a particle for display media according to the present invention.

BEST MODE FOR CARRYING OUT THE INVENTION

Firstly, a basic structure of an information display panel in which display media are driven by an electric field is explained as an example of an information display panel of the present invention. In the information display panel according to the present invention, an electric field is applied to display media composed of particles for display media sealed in a space between two opposed substrates. The display media are attracted along a direction of the applied electric field by a force of the electric field, Coulomb force and the like, and information display such as an image is performed by movements of the display media caused by change of the electric field. Therefore, it is necessary to design the information display panel so that the display media can move uniformly as well as maintaining stability during repetitive rewrite of display or continuous display. Here, forces applied to the particles constituting the display media may be an attraction force between the particles due to Coulomb force, an electric image force with respect to electrodes, substrates or partition walls, an intermolecular force, a liquid bonding force, gravity and the like.

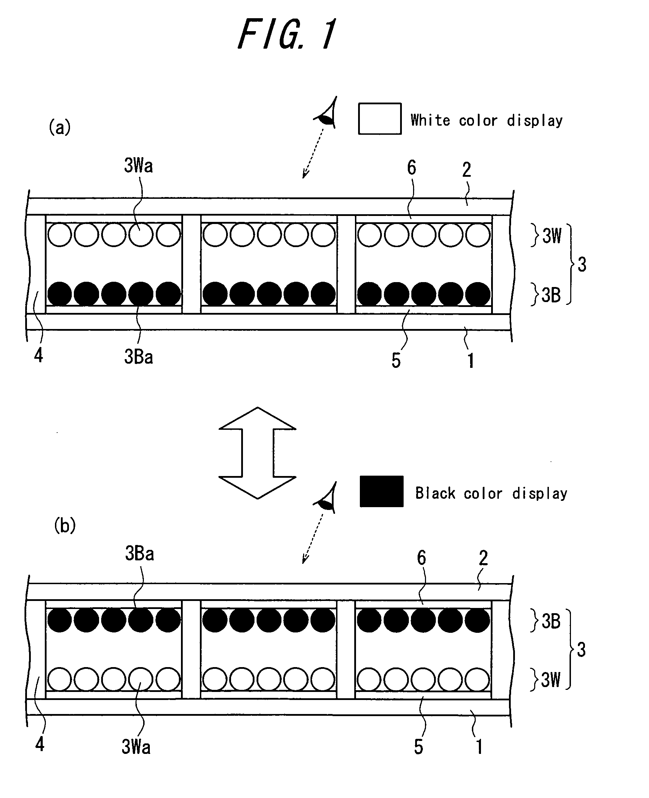

An example of the information display panel according to the present invention is described with reference to Figs. 1a and 1b.
In the example shown in Figs. 1a and 1b, at least two kinds of display media consisting of at least one kind of particles including particles for display media having optical reflectance and charging characteristics and having different optical reflectance and charging characteristics (here, white color display media 3W comprised of a particle group of white color particles 3Wa for white color display media and black color display media 3B comprised of a particle group of black color particles 3Ba for black color display media) are sealed between substrates and moved in each cell formed by partition walls 4 in a perpendicular direction with respect to substrates 1, 2, in accordance with an electric field generated by application of voltage between an electrode 5 (individual electrode) provided in the substrate 1 and an electrode 6 (individual electrode) provided in the substrate 2. Then, a white color display is performed by having an observer view the white color display media 3W as shown in Fig. 1a, or a black color display is performed by having the observer view the black color display media 3B as shown in Fig. 1b. It is to be noted that the partition walls at the front side are omitted in Figs. 1a and 1b. The electrodes can be either provided outside the substrates or embedded inside the substrates. In addition, the above-mentioned electrodes 5, 6 can be arranged at right angles to each other as line electrodes.
In the information display panel an electric field may be applied to the display media by electric field forming means from outside instead of the electrodes.

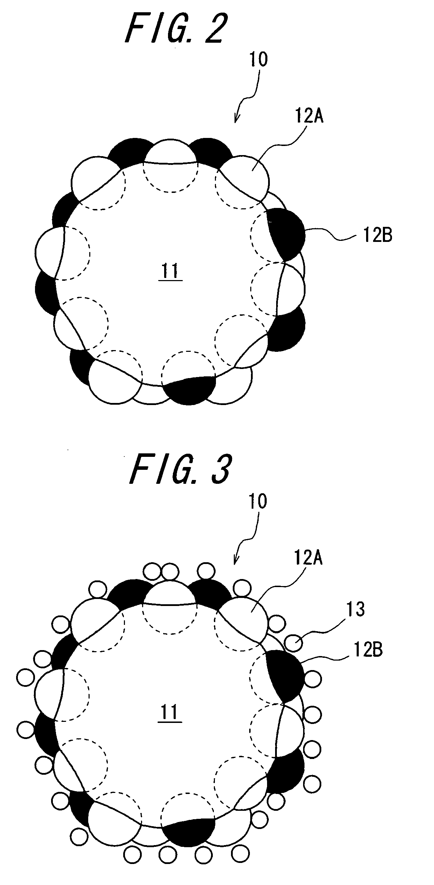

Next, a basic structure of a particle for display media according to the present invention shown in Fig. 2 is explained.
A particle for display media 10 consists of a mother particle 11, first child particles 12A and second child particles 12B. Although the first child particles 12A are shown in white and the second child particles 12B are shown in black in Fig. 2, the first child particles 12A and the second child particles 12B actually have the same kind of color or a transparent color. The first child particles 12A and the second child particles 12B are embedded in the surface of the mother particle 11. By embedding the first high child particle 12A and the second child particle 12B, which have a smaller particle diameter and higher hardness than those of the mother particle 11, in the surface of the mother particle 11, the surface of the mother particle 11 can be hardened. Since the particle for display media 10 is configured in such a manner that the surface of the mother particle 11 is covered which the first child particles 12A and the second child particles 12B, which have a smaller particle diameter (= larger curvature), the particle for display media 10 has only a small adhered area to the panel substrate. In addition, since the first child particles 12A and the second child particles 12B have high hardness, a part of the particle for display media 10 which comes into contact with the substrates is hardly deformed because of an image force of electrification charge. Therefore, the adhered area of the particle for display media 10 to the substrate is small and then adherence of the particle for display media 10 to the substrate is small. As a result, the particle for display media 10 can be efficiently driven by a small electric field and an information display panel achieving high contrast with low driving voltage can be obtained.

In addition, the first child particles 12A and the second child particles 12B have different charging characteristics with each other. It is necessary to precisely design and control the charge amount of the particles for display media in an information display panel in order to precisely control drive of the particles for display media.

The charging characteristics of the particle for display media 10 depend on the charging characteristic of the child particles attached to the surface of the mother particle 11. In other words, the particle for display media 10 made of the mother particle to whose surface child particles having charging characteristics of a positive saturated charge amount are attached shows positively charged characteristics. Similarly, the particle for display media 10 made of the mother particle to whose surface child particles having charging characteristics of a negative saturated charge amount are attached shows negatively charged characteristics. In addition, the particle for display media 10 made of the mother particle to whose surface child particles having a large absolute saturated charge amount are attached shows a large absolute saturated charge amount while the particle for display media 10 made of the mother particle to whose surface child particles having a small absolute saturated charge amount are attached shows a small absolute saturated charge amount.

The child particles have a low degree of freedom for controlling the saturated charge amount. As a result, the particle for display media 10 configured in such a manner that one kind of child particles are attached to the surface of the mother particle has a low degree of freedom for controlling the saturated charge amount. However, as shown in Fig. 2, by mixing two kinds of child particles (first child particles 12A and second child particles 12B) having the different saturated charge amount at a certain rate and attaching the child particles to the surface of the mother particle 11 to be combined, it is possible to appropriately control the saturated charge amount and to obtain the particle for display media 10 having the appropriate saturated charge amount. As a result, it is possible to provide an information display panel capable of achieving good display performance (high contrast and low voltage driving), especially high contrast for a long term from the initial stage.

It is to be noticed that the child particles embedded in the surface of the mother particle 11 at the front side are omitted in Fig. 2. High-densely three-dimensionally crosslinked resin particles and the like may be used as the first child particles 12A and the second child particles 12B.

The first child particle 12A and the second child particle 12B have the aspect ratio of more less than 0.8.

When the aspect ratio is less than 0.8, it is difficult to homogeneously attach the child particles to the surface of the mother particle to be combined. Without homogeneous covering, all the surface of the mother particle which is not covered with the child particles to be exposed, which will cause adverse effect on charging control and durability.

The first child particles have a particle diameter within a range between 2/3 and 3/2 of that of the second child particles.

When the first child particles and the second child particles have a greatly different particle diameter from the above-mentioned range, it is difficult to homogeneously attach the child particles to the surface of the mother particle to be combined. Without homogeneous covering, a part of the surface of the mother particle which is not covered with the child particles is exposed, which will cause adverse effect on charging control and durability.

A definition and a measuring method of the aspect ratio (sphericity) and the average particle diameter of the child particle are as follows.

The aspect ratio As analyzed by an image taken by a scanning electron microscope (S2700, manufactured by Hitachi, Ltd.) is defined as an index of sphericity. When a short shaft diameter is $D_{sa}$ and a long shaft diameter is $D_{sb}$, the aspect ratio is defined as $As=D_{sa}/D_{sb}$. In addition, the average particle diameter is defined as $D=(D_{sa}+D_{sb})/2$.

The aspect ratio As and the average particle diameter D are measured for 100 particles and the average thereof is adopted. The child particles of the particles for display media according to the present invention is in a spherical shape with $As\geq0.8$ and a general external additive for them is in a nonspherical shape with $As<0.8$.

The absolute difference between the saturated charge amount of the first child particles and the saturated charge amount of the second child particles is not less than 10 $\mu C/m^2$.

When the above-mentioned absolute difference of the saturated charge amount is less than 10 $\mu C/m^2$, the first child particles and the second child particles have the generally identical charge amount, which means that one kind of child particles are used so that it is difficult to arbitrarily control the saturated charge amount.

Fig. 3 shows other structural example of a particle for display media according to the present invention.

A particle for display media 10 is configured in such a manner that first child particles 12A and second child particles 12B are embedded in a surface of a mother particle 11 and fine particles 13 are attached to a periphery of the child particles. Even the particles for display media 10 hit one another or hit the panel substrate or the electrode after repetitive rewrite of display, the fine particles 13 attached to the surface of the particles for display media 10 are not buried in the particles for display media 10, or buried in a slower manner than conventional particles for display media, as the surface of the mother particle is surrounded by the child particles having high hardness. Hence, it is possible to maintain an initial performance without increase in adherence of the particles for display media 10 to the substrate, deterioration of flow characteristics of the particles for display media 10, or change in charging characteristics of the particles for display media 10 even after repetitive rewrite of display. That is to say, it is possible to provide the information display panel capable of maintaining an initial performance for a long term and having good durability.

In addition, it is considered that gradual release of the fine particles 13 which are initially attached between the child particles as the repetitive rewrite of display contributes to an improvement in duration.

EXAMPLE

The particles for display media according to the present invention are produced and initial display test and repetitive rewrite display test (durability test) are conducted for the information display panel using thus-produced particles for display media.

First, it is described how to produce the particles for display media according to the present invention.

(1) Mother particle

Polymethylpentene polymer (TPX-R18: manufactured by Mitsui Chemicals, Inc.) of 100 pts.wt as a positively-charged mother particle and carbon black (Special Black 4: manufactured by Evonik Deggusa Japan Co., Ltd.) of 5pts.wt as a colorant are melt and kneaded by a biaxial kneading machine, crushed to fine pieces by a Jet mill (Labo-Jet mill IDS-LJ: manufactured by Nippon Pneumatic Mfg. Co., Ltd.), classified by a classifying machine (MDS-2: manufactured by Nippon Pneumatic Mfg. Co., Ltd.), and then melt and spheroidized by a melting-and-spheroidizing machine (MR-10: manufactured by Nippon Pneumatic Mfg. Co., Ltd.), thereby a positively charged mother particle X with the particle diameter within a range of 0.5 $\mu$m and 50 $\mu$m and the average particle diameter of R0= 9.0 $\mu$m are obtained.

Polymethylpentene polymer (TPX-R18: manufactured by Mitsui Chemicals, Inc.) of 100 pts.wt as a negatively charged mother particle and titanium dioxide (Tipaque CR50: manufactured by Ishihara Sangyo Kaisya, Ltd.) of 100 pts.wt as a colorant are melt and kneaded by the biaxial kneading machine, crushed to fine pieces by the Jet mill (Labo-Jet mill IDS-LJ: manufactured by Nippon Pneumatic Mfg. Co., Ltd.), classified by the classifying machine (MDS-2: manufactured by Nippon Pneumatic Mfg. Co., Ltd.), and melt and spheroidized by the melting-and-spheroidizing machine (MR-10: manufactured by Nippon Pneumatic Mfg. Co., Ltd.), thereby a negatively charged mother particle Y with the particle diameter within the range of 0.5 $\mu$m and 50 $\mu$m and the average particle diameter of R0= 9.4 $\mu$m are obtained.

(2) Child particles

Child particles a1 to a4, bl, c1 and d1 shown in Table 1 are prepared as the child particles.

An emulsifier having the monomer weight ratio shown in Table 1 and an initiator are dispersed and emulsified in purified water having six times of the monomer weight ratio in accordance with a standard method of emulsion polymerization, polymerized at 70 degrees Celsius for 38 hours in an N2 gas reflux, sufficiently washed in purified water and moisture thereof is evaporated in a vacuum oven, so as to obtain a dried powder sample as the child particle. All the monomers are used by purifying test reagent manufactured by Wako Pure Chemical Industries, Ltd.. As the emulsifier, sodium lauryl sulfate (test reagent manufactured by Wako Pure Chemical Industries, Ltd.) is used. As the polymerization initiator, 2,2'-azobis [2-methtl-N-(2-hydroxyethyl)Propiolamide] (Wako Pure Chemical Industries, Ltd.) of 0.4 pts.wt is used.

[Table 1]

| | child particle a1 | child particle a2 | child particle a3 | child particle a4 | child particle b1 | child particle c1 | child particle d1 |
|---|---|---|---|---|---|---|---|
| Chemical species | Poly(styrene-divinylbenzene)<br><br>Monomer weight ratio 60:40 | Poly(styrene-divinylbenzene)<br><br>Monomer weight ratio 60:40 | Poly(styrene-divinylbenzene)<br><br>Monomer weight ratio 60:40 | Poly(styrene-divinylbenzene)<br><br>Monomer weight ratio 60:40 | Poly(methyl methacrylate-divinylbenzene)<br><br>Monomer weight ratio 60:40 | Poly(styrene-methyl methacrylate-divinylbenzene)<br><br>Monomer weight ratio 50:10:40 | Poly(styrene-methyl methacrylate-divinylbenzene)<br><br>Monomer weight ratio 30:30:40 |
| Additive weight of emulsifier [vs. monomer%] | 2.0 | 1.6 | 1.4 | 1.3 | 2.0 | 2.0 | 2.0 |
| 3 dimensional crosslinked/non-closslinked | crosslinked | crosslinked | crosslinked | crosslinked | crosslinked | crosslinked | crosslinked |
| Average particle diameter [nm] | 150 | 190 | 220 | 250 | 120 | 150 | 160 |
| Aspect ratio | 0.90 | 0.95 | 0.97 | 0.99 | 0.89 | 0.82 | 0.78 |
| Saturated charge amount q/s [$\mu C/m^2$] | -35 | -29 | -23 | -18 | +15 | -22 | -14 |

EP 2 202 567 A1

(3) A Method for producing the particles for display media and combination of the mother particle and the child particles

The particles for display media are produced in such a manner that the mother particles X or Y and one or two kinds of child particles selected as shown in Table 2 from the child particles shown in Table 1 are combined by the following method (i) in a combining machine and then silica fine particles (HDKH3004: manufactured by Wacker Asahikasei Silicone Co., Ltd.) are attached to the surface of the combined particles by the following method (ii).

(i) Method for attaching and combining mother particle and child particles Apparatus: Sample Mill SK-M10 (manufactured by Kyoritsu Riko Co., Ltd.) Condition: 70 degrees Celsius, 16500rmp x 30-90 minutes

For example, mixed powder (bulk dimensions = apparent dimensions 130 $cm^3$) of the mother particles X and the child particles a1, b1, which are mixed at the predetermined ratio, is input in the above apparatus at once and exposed by the combining process under a certain condition, and then sieved by an SUS sieve with sieve meshes of 150 $\mu$m, so as to obtain the mixed powder passed through the sieve as the combined particles X(a1,b1). In addition, particles X (al) are obtained by combining the mother particles X and the child particles a1 by the above-mentioned method.

(ii) Method for attaching an external additive of silica fine particles Carbon Mixer (manufactured by SMD Corporation)

Condition: 25 degrees Celsius, 4000rmp x 15 minutes

Mixed powder (bulk dimensions = apparent dimensions 200 $cm^3$) of the combined particles and an external additive agent consisting of the silica fine particles (HDKH3004, manufactured by Wacker Asahikasei Silicone Co., Ltd.) of 2% weight ratio is input in the above apparatus at once and exposed by the attaching process under the above condition, and then sieved by the SUS sieve with sieve meshes of 150 $\mu$m, so as to obtain the mixed powder passed through the sieve as particles for display media.

(4) Evaluation method

Equivalent amounts of the positively charged particles for display media and the negatively charged particles for display media are mixed and stirred to perform frictional electrification, and then filled in cells formed by a glass substrate which has an ITO processed internal side connected to a power source and a copper substrate, which are disposed via a spacer of 100 $\mu$m, under a condition with the volume occupancy of 30%, so as to obtain the information display panel. When each of the ITO glass substrate and the copper substrate are connected to the power source and direct voltage is applied such that the ITO glass substrate has a low potential and the copper substrates has a high potential, the positively charged particles for display media move to the low potential side, while the negatively charged particles for display media move to the high potential side. In case that the positively charged particles for display media are black and the negatively charged particles for display media are white, the black color display is observed through the glass substrate and, when the potential of the applied voltage is reversed, each of the particles for display media moves in opposite directions, thereby the while color display is observed. The applied voltage is changed from -200 V to +200 V by 10 V, and reflectance at each display condition is measured, so as to obtain the ratio of the reflectance at the white color display and the reflectance at the black color display when the voltage having the same absolute value is applied, as the contrast ratio at the voltage. In addition, the contrast ratio when the applied voltage is 200 V is defined as initial C200 to be used an index of sharp display characteristics of the particles for display media. After one million times of the alternate applied voltage of 200 V at the frequency of 1 kHz to the information display panel and reverse movement of the particles for display media thereby, the contrast ratio is measured at each applied voltage in the similar manner as stated above, so as to obtain C200 after one million times of duration.

(5) Judgment

The performance evaluation in Table 2 is judged based on the following standard.
A panel having initial C200 of not less than 10.0 is judged to have very good initial performance.
A panel having initial C200 of not less than 6.0 and less than 10.0 is judged to have good initial performance.
A panel having initial C200 of not less than 5.0 and less than 6.0 is judged to have little bad initial performance.
A panel having initial C200 of less than 5.0 is judged to have bad initial performance.
A panel having C200 after one million times duration of not less than 10.0 is judged to have very good durability.
A panel having C200 after one million times duration of not less than 6.0 and less than 10.0 is judged to have good durability.
A panel having C200 after one million times duration of not less than 5.0 and less than 6.0 is judged to have little bad durability.

A panel having C200 after one million times duration of less than 5.0 is judged to have bad durability.

As a measurement method for measuring properties mentioned in examples, the surface coverage of the mother particle by the child particles and the saturated charge amount q/s are measured as follows.

(i) Surface coverage of the mother particle by the child particles

The surface coverage is approximated by a plane closest packing coverage by true sphere of monodispersity of the particle diameter.

That is to say, the surface coverage $C_N$ of the mother particle by the child particles N is

$$C_N = \frac{6d_N \Phi}{\sqrt{3}\pi D \phi_N}$$

where D is the average particle diameter of the mother particle, $\Phi$ is the compounding amount (volume fraction) of the mother particle, $d_N$ is the average particle diameter of the child particles N, and $\phi_N$ is the compounding amount (volume fraction) of the child particles N .

(ii) Method for measuring the saturated charge amount q/s of the child particles and the particles for display media

The saturated charge amount of the particles when mixed and stirred with a standard carrier by a standard technique of a blowoff method. As a blowoff charge amount apparatus, TB -203 (manufactured by KYOCERA Chemical Corporation), as a mixing and stirring device, a general swing-arm shaking apparatus YD-8 (manufactured by YAYOI Co., LTD.) and as a standard carrier, a pherical ferrite carrier F96-80 (manufactured by Powdertech Co., Ltd.) are used. The combined weight ratio of the measurement sample and the carrier is 100:0.1 (in case of the child particles), 100:3 (in case of the particle for display media).

[Table 2]

| | Example 1 | Example 2 | Example 3 | Example 4 | Example 5 | Example 6 | Example 7 | Example 8 | Example 9 | Comparative Example |
|---|---|---|---|---|---|---|---|---|---|---|
| Positively charged particles for display media | X(b1,c1) | X(b1) | X(b1) | X(b1) | X(b1) | X(b1) | X(b1) | X(b1) | X(b1,c1) | X(b1) |
| Saturated charge amount of positively charged particles for display media [$\mu$C/m$^2$] | +12 | +17 | +17 | +17 | +17 | +17 | +17 | +17 | +12 | +17 |
| Surface coverage by child particle1 [%] | 72 | 80 | 80 | 80 | 80 | 80 | 80 | 80 | 72 | 80 |
| Surface coverage by child particle2 [%] | 8 | 0 | 0 | 0 | 0 | 0 | 0 | 0 | 8 | 0 |
| Minimum child particle aspect ratio | c1 0.89 | b1 0.89 | b1 0.89 | b1 0.89 | b1 0.89 | b1 0.89 | b1 0.89 | b1 0.89 | c1 0.89 | b1 0.89 |
| Diameter ratio of child particle | 1.25 | - | - | - | - | - | - | - | 1.25 | - |
| Saturated charge amount difference of child particle [$\mu$C/m$^2$] | 37 | - | - | - | - | - | - | - | 37 | - |
| Negatively charged particles for display media | Y(a1,b1) | Y(a1,b1) | Y(a1,c1) | Y(a1,d1) | Y(a3,c1) | Y(a4,c1) | Y(a1,a2) | Y(a1,a3) | Y(a3) | Y(a1) |
| Saturated charge amount of negatively charged particles for display media [$\mu$C/m$^2$] | -15 | -15 | -24 | -17 | -26 | -23 | -32 | -25 | -20 | -39 |
| Surface coverage by child particle1 [%] | 60 | 60 | 8 | 12 | 40 | 40 | 8 | 8 | 80 | 80 |
| Surface coverage by child particle2 [%] | 20 | 20 | 72 | 68 | 40 | 40 | 72 | 72 | - | - |

(continued)

| | Example 1 | Example 2 | Example 3 | Example 4 | Example 5 | Example 6 | Example 7 | Example 8 | Example 9 | Comparative Example |
|---|---|---|---|---|---|---|---|---|---|---|
| Minimum child particle aspect ratio | b1 0.89 | b1 0.89 | c1 0.82 | d1 0.78 | c1 0.82 | c1 0.82 | a1 0.90 | a1 0.90 | a3 0.97 | a1 0.90 |
| Diameter ratio of child particle | 1.25 | 1.25 | 1.00 | 1.07 | 1.47 | 1.67 | 1.27 | 1.47 | - | - |
| Saturated charge amount difference of child particle [$\mu$C/m$^2$] | 50 | 50 | 13 | 21 | 1 | 4 | 6 | 12 | - | - |
| Initial C200 | 10.5 | 8.8 | 7.1 | 7.9 | 5.9 | 5.5 | 5.0 | 6.1 | 6.2 | 3.6 |
| Initial performance evaluation | very good | good | good | good | little bad | little bad | little bad | good | good | bad |
| C200 after one million times duration | 10.1 | 8.7 | 7.3 | 4.4 | 6.1 | 1.3 | 6.2 | 6.8 | 6.7 | 3.8 |
| Duration performance evaluation after one million times evaluation | very good | good | good | bad | good | good bad | good | good | good | bad |

It is found from the results in Table 2 that the charge amount of the particles for display media can be controlled by changing the child particles 1 and 2.

All the results in Examples 1, 2, 3, 8 and 9 are good.

In Example 4, since the minimum aspect ratio of the child particles of the negatively charged particles for display media is 0.78, which is less than 0.8, the result of the duration performance evaluation after one million times is bad.

In Example 5, since the saturated charging characteristics difference of the child particles of the negatively charged particles for display media is 1 $\mu$C/m$^2$, which is less than 10 $\mu$C/m$^2$, the result of the initial performance evaluation is a little bad.

In Example 6, since the saturated charging characteristics difference of the child particles of the negatively charged particles for display media is 4 $\mu$C/m$^2$ and the particle diameters of the two kinds of child particles of the negatively charged particles for display media is 1.67, the result of the initial performance evaluation is a little bad and the result of the duration performance evaluation after one million times is bad.

In Example 7, since the saturated charging characteristics difference of the child particles of the negatively charged particles for display media is 1 $\mu$C/m$^2$, which is less than 10 $\mu$C/m$^2$, the result of the initial performance evaluation is a little bad.

In Comparative Example, since the only one kind of the child particles are used for the positively charged particles for display media and the negatively charged particles for display media are used, all the results of the performance evaluation are bad.

As stated above, it is found that by using the particles for display media of the present invention, an information display panel superior in initial performance and capable of maintaining good display characteristics even after repetitive rewrite (one million times) of display can be provided.

INDUSTRIAL APPLICABILITY

The information display panel according to the present invention is preferably applicable to the display unit for mobile equipment such as notebook personal computers, electric diary, PDAs (Personal Digital Assistants), cellular phones, handy terminals and so on; the electric paper such as electric books, electric newspapers, electric manual (instruction) and so on; the bulletin boards such as signboards, posters, blackboards (whiteboards), and so on; the image display unit for electric calculator, home electric application products, auto supplies and so on; the card display unit such as point cards, IC cards and so on; and the display unit for electric advertisements, information boards, electric POPs (Point Of Presence, Point Of Purchase advertising), electric price tags, electric shelf tags, electric musical score, RF-ID device and so on, the display unit for electric equipments such as POS terminals, car navigation system, clock and so on, and also preferably used as a rewritable paper which drives the display media by use of external electronic field forming means.

It is to be noted that a driving method of the information display panel according to the present invention may apply a variety of types of the driving methods such as a simple matrix driving method and a static driving method that do not use a switching element for the panel itself, an active matrix driving method using a three-terminal switching element represented by a thin-film transistor (TFT) or a two-terminal switching element represented by a thin-film diode (TFD), an external electronic field driving method using external electronic field forming means, and the likes.

**Claims**

1. A particle for display media combined in a form of a mother particle embedded with first child particles and second child particles, wherein
   the first child particles and the second child particles have a smaller particle diameter and higher hardness than those of the mother particle and
   the first child particles and the second child particles have different charging characteristics with each other.

2. The particle for display media according to claim 1, wherein the first child particles and the second child particles have an aspect ratio of not less than 0.8.

3. The particle for display media according to claim 1 or 2, wherein the first child particles have an average particle diameter within a range between 2/3 and 3/2 of that of the second child particles.

4. The particle for display media according to any one of claims 1 to 3, wherein an absolute difference between a saturated charge amount of the first child particles and a saturated charge amount of the second child particles is not less than 10 $\mu$C/m$^2$.

**5.** The particle for display media according to any one of claims 1 to 4, wherein fine particles are attached to outer sides of the first child particles and the second particles.

**6.** An information display panel, in which at least one kind of display media are sealed in a space between two substrates, at least one of which is transparent, for displaying an image by electrically moving the display media, wherein at least one kind of the particle for display media according to any one of claims 1 to 5 is used as the display media.

# FIG. 1

(a)

White color display

3Wa      6    2

}3W ⎫
     ⎬ 3
}3B ⎭

4    3Ba              5    1

Black color display

(b)

3Ba      6    2

}3B ⎫
     ⎬ 3
}3W ⎭

4    3Wa              5    1

# FIG. 2

# FIG. 3

## INTERNATIONAL SEARCH REPORT

| | International application No. |
|---|---|
| | PCT/JP2008/066742 |

| A. CLASSIFICATION OF SUBJECT MATTER |
|---|
| *G02F1/167*(2006.01)i, *B82B3/00*(2006.01)i |

According to International Patent Classification (IPC) or to both national classification and IPC

| B. FIELDS SEARCHED |
|---|
| Minimum documentation searched (classification system followed by classification symbols) |
| G02F1/167, B82B3/00 |

| Documentation searched other than minimum documentation to the extent that such documents are included in the fields searched |
|---|
| Jitsuyo Shinan Koho          1922-1996   Jitsuyo Shinan Toroku Koho   1996-2008 |
| Kokai Jitsuyo Shinan Koho    1971-2008   Toroku Jitsuyo Shinan Koho   1994-2008 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | JP 2007-171482 A  (Bridgestone Corp.),<br>05 July, 2007 (05.07.07),<br>Claim 2; Par. Nos. [0007] to [0012], [0032] to<br>[0033]; Fig. 4<br>(Family: none) | 1-2,6<br>3-5 |
| Y<br>A | JP 2005-345807 A  (Bridgestone Corp.),<br>15 December, 2005 (15.12.05),<br>Par. Nos. [0009] to [0011]; Fig. 4<br>(Family: none) | 1-2,6<br>3-5 |
| Y<br>A | JP 2006-106596 A  (Bridgestone Corp.),<br>20 April, 2006 (20.04.06),<br>Par. Nos. [0019], [0031] to [0032]; Fig. 4<br>(Family: none) | 1-2,6<br>3-5 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 October, 2008 (06.10.08) | 14 October, 2008 (14.10.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2003050606 A